# EUROPEAN PATENT APPLICATION

(11) **EP 0 828 221 A2**
(43) Date of publication of application: **11.03.1998**
(21) Application number: 97305772.2
(22) Date of filing: 31.07.1997
(51) Int. Cl.: G06F 17/30, H04L 12/56

(54) **Network data access method**

(30) Priority: 06.09.1996 GB 9618639; 04.10.1996 US 720884
(71) Applicant: NORTHERN TELECOM LIMITED, Montreal, Quebec H2Y 3Y4 (CA)
(72) Inventor: Burn-Thornton, Kathryn Elizabeth, Ivybridge, Devon PL21 0HT (GB)
(74) Representative: Ryan, John Peter William

(57) **Abstract**

A data item in a data set having a virtual structure, each item having a virtual location, is accessed by the following steps. A target location in the structure corresponding to the data item to be accessed is identified. A current location for the process is identified. The current location is moved through the structure of the data set to the target location, using a routing algorithm. When the current location is the target location, the data item corresponding to the target location is accessed. The same routing algorithm may be used for other processes, and can increase the efficiency of accessing by reducing conflict between access processes.

## Description

### Field of the Invention

The present invention relates to methods of accessing a data item in a data set, methods of accessing data sets, methods of retrieving selected data items, systems for accessing data items, and methods of configuring such systems.

### Background of the Invention

As databases increase in size, complexity and variance in data stored, a need has been identified for increased efficiency in the accessing of the data stored and in the processing of this data. Similar considerations apply to analysis of streams of real time data. The problems increase as the data rate increases. Searching for the address of a desired data item or searching for a particular value can be prohibitively slow. It is known that the use of multiple process techniques such as parallel processing techniques and multi-tasking techniques can increase the speed and efficiency of such data accessing. It is also known to use hashing techniques to reduce the number of storage accesses.

In particular where multiple process techniques are employed, it is often the case that multiple processes attempt to access the same address in memory simultaneously. This results in processing delays as the various processes are forced to wait for access to a particular memory address. Deadlock, where processes wait indefinitely for each other to finish, can occur, with catastrophic results. Equivalent problems can occur when accessing data in a real time data stream.

In the particular application of network performance data analysis, there is a need to analyse large quantities of data quickly, to sift out important parameters, to flag unusual events, identify trends, or identify problems apparent only from correlation between parameters.

### Summary of the Invention

The invention aims to improve on the known techniques.

According to the invention, there is provided a method of accessing a data item in a data set, the data set having a virtual structure, and each item having a corresponding virtual location in the structure, the method comprising the steps of:
determining a target location corresponding to the data item to be accessed;
identifying a location as a current location, and selecting a path to move the current location through the data set structure to the target location using a routing algorithm; and
accessing the data item corresponding to the target location, when the current location is the target location.

The use of a routing algorithm can increase the efficiency of access, can increase the speed of access or can reduce the risk of conflict with another process.

According to another aspect of the invention, there is provided a method of retrieving a selected data item from a buffer receiving a stream of real time data, comprising the steps of;
assigning virtual locations to the data;
determining a target location corresponding to the selected item;
allocating a location as a current location;
moving the current location to the target location via other locations according to a routing algorithm;
retrieving the selected data item from the buffer.

According to another aspect of the invention, there is provided apparatus for accessing a data item in a data set, the data set having a virtual structure, and each item having a corresponding virtual location, the apparatus comprising:
means for determining a target location corresponding to the data item to be accessed;
means for identifying a location as a current location;
means for moving the current location to the target location via other locations using a routing algorithm;
accessing the data item when the current location is the target location.

According to another aspect of the invention, there is provided a method of configuring apparatus for accessing data using a routing algorithm, selected according to a pattern identified in the data, the method comprising the steps of:
inputting test data comprising a predetermined data pattern;
accessing a data item using the method of claim 1;
repeating the access method using different routing algorithms;
comparing the results to determine a suitable routing algorithm for the given data pattern;
storing the choice of algorithm in the system.

This enables the routing algorithm to be selected according to patterns in the data.

Advantageously, moving the current location using the routing algorithm is carried out on the basis of occupation status of other locations by other processes.

Advantageously, a plurality of access processes are carried out concurrently, using the same routing algorithm. The routing algorithm can minimise delays from access conflicts between processes. Advantageously multiple processors are used to carry out the accesses.

Advantageously, the routing algorithm is selected according to patterns in the data set.

Advantageously, the data set comprises a stream of real-time data, for example performance data from a communications network.

### Brief Description of the Drawings

For a better understanding of the invention and how it may be carried into effect, it will now be described by way of example with reference to the drawings in which:
- Fig 1: shows a simplified three layer model of a known ATM network;
- Fig 2: shows a schematic diagram of an example of a system for controlling networks;
- Fig 3: shows a schematic diagram of an example of an access process of fig. 2 and according to an embodiment of the invention;
- Fig 4: shows in schematic form an example of a datastream from the networks referred to in fig. 2;
- Fig 5: shows in schematic form an example of a scan for network identifiers, as referred to in fig. 2;
- Fig. 6: shows in schematic form an example of creating the structure referred to in fig. 5;
- Fig. 7: shows in schematic form an example of a virtual location structure created according to fig. 6;
- Fig. 8: shows an example of moving the current location, as referenced in fig. 3;
- Fig 9: shows how different routing algorithms are used for different networks; and
- Fig. 10: shows in schematic form steps for configuring apparatus for accessing data.

### Detailed Description

Routing algorithms are used conventionally in various types of communication networks, notably packet switched networks. A packet entering a network has a given destination and many possible routes to reach the destination. Many algorithms have been developed, to suit different network architectures and to optimise different characteristics. Often congestion avoidance is a major factor. Speed of routing may also be important. Routing may be static or dynamic. The latter indicates that routing decisions are based on prevailing network conditions.

Congestion avoidance properties of routing algorithms can be useful in data access applications. The problem of avoiding simultaneous access to a given location in memory or in a virtual dataspace can be seen to correspond to the network problem of congestion where messages reach the same network node simultaneously.

In a network, using the fastest route for any one message will probably cause other messages to be held up, and so overall congestion reduction will tend to require that most messages use less than the fastest route. Likewise, to achieve maximum overall access speed for a plurality of concurrent access sequences, without conflict, many accesses may need to be delayed. Routing algorithms can effectively reduce the total amount of the delays, and ensure that access conflicts which can lead to lock out and failure of the processes are avoided.

The routing algorithm controls the delays for all access sequences by allocating a route through a dataspace for each sequence, towards its desired target location in the dataspace. The route chosen by the algorithm may depend on occupancy of the target location by other processes and on occupancy of other related or neighbouring locations.

Also, the route taken may depend on other data to be found by a given process, or on preliminary data which must be found first, e.g. a pointer. Often data will be arranged in a particular structure which allows a target location to be identified in a number of different ways.

This means that for a given data item, pointers to its actual address, or its place in a data stream, may be available from several locations, or sequences of locations. Thus there is a choice of routes, and a routing algorithm can be applied. The structure of the data, or patterns in the data will determine what sort of routing algorithm is more appropriate. Furthermore, the different routes may be different lengths, and so a routing algorithm can determine the quickest route, thus giving an advantage even if no other processes are competing.

Even if no pointers are needed to identify the target location, traversing other locations to reach the target location is preferred to simply waiting idly for the location to become free. Where multiple processes are competing, it enables a more efficient overall solution to be obtained.

Another relevant property of routing algorithms is their worst-case performance. In other words, it may be preferable to use an algorithm which is not particularly fast for light loading scenarios, but which provides relatively good performance when approaching the capacity limit of the network. This is applicable to data analysis applications where it may be appropriate to specify worst-case performance. This may assist in synchronising different access processes, which may be necessary if the data is time varying, and the accessed data is subjected to a correlation process.

An example in the context of analysis of a database of network performance data, will now be described.

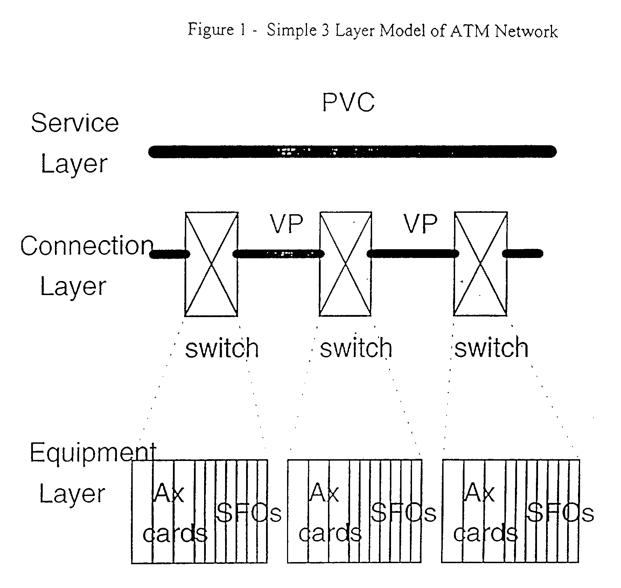

Figure 1 shows a simple 3 layer model of an asynchronous transfer mode (ATM) network. A service layer provides a virtual traffic traversable link between two end points (the two end points being the source and destination of the traffic). An example of a service layer is a permanent virtual circuit (PVC).

The connection layer is the middle layer and consists of many virtual parts (VP) which are collections of virtual circuits. A collection of virtual paths constitutes the permanent virtual circuit.

The equipment layer is the bottom layer, typically consisting of switches which contain switch control cards called Ax cards and SF (switching fabric) cards which in turn have traffic queues associated with them. These queues have priorities assigned to them dependent on the quality of service provided.

At each layer, network performance parameters can be measured. At the lower layers, more detailed measurements may be made of equipment performance parameters. More detailed performance parameters may also be available at a service layer by virtue of a summation of the performance parameters of the components constituting the connection layer.

Analysing network performance data may enable flow control or congestion control to be optimised. This may involve predicting congestion, modelling the factal-like traffic patterns, and reconfiguration of the network. One of the problems about analysing network performance data is the vast amount of data which is collected from a typical network. Many megabytes of data may be collected every minute. This makes it difficult to sift out relevant performance measurements from many irrelevant measurements.

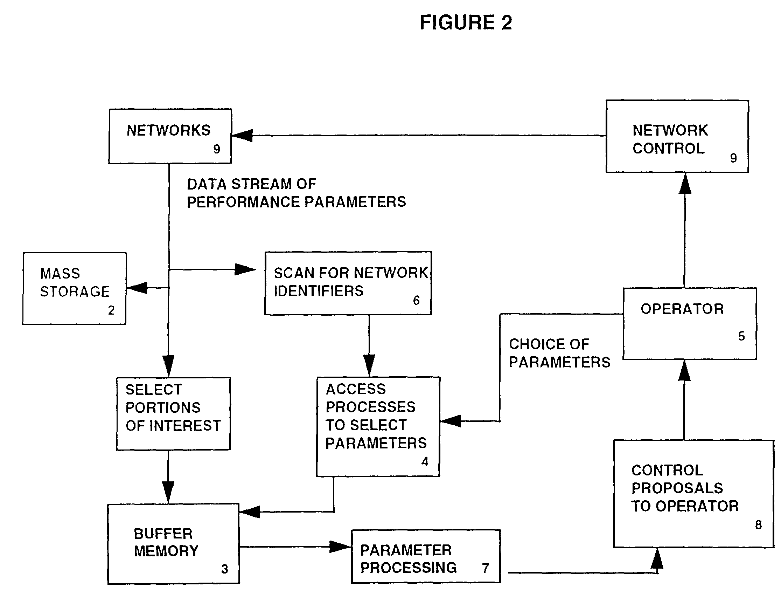

Figure 2 shows in schematic form a overall control loop for a network or a heterogeneous group of networks 1. A stream of performance parameters comes out of the networks and is fed to mass storage means 2 for later analysis. To provide effective control of the network, it is necessary to process the data effectively in real time, rather than processing the data in the mass storage means. Accordingly, selected portions of interest are stored in a buffer memory 3. A further selection is made of particular parameters, by access processes 4. These access processes are dependent on a choice of parameters which may be predetermined, or chosen by an operator 5. The choice of parameters may be made automatically, according to whether any data of interest is found (not shown). The access processes are also dependent on identifiers in the datastream indicating the structure of the datastream, identified by a datastream scanning means 6.

Once parameters have been accessed, a parameter processing means 7 may draw conclusions from the parameters, for example predicting congestion. On the basis of an output of the parameter processing means, control proposals may be made to an operator illustrated by stage 8 in figure 2. The operator would normally be included in the control loop, though for some aspects, automatic control may be more appropriate to achieve faster response. A network control element 9 is shown in figure 2, completing the control loop for the networks 1.

Some of the elements of the control loop illustrated in figure 2 will now be described in more detail.

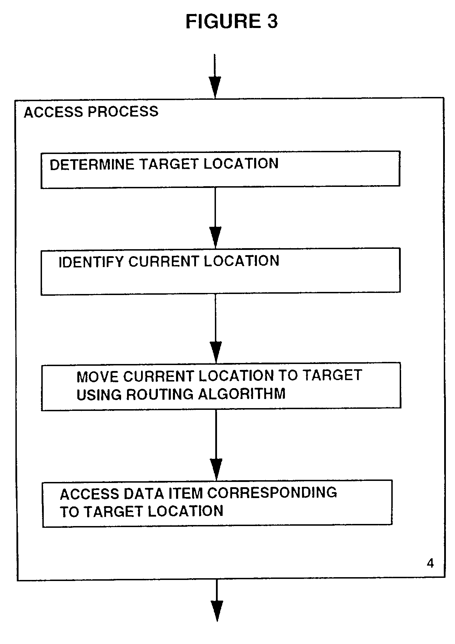

Figure 3 shows an access process 4 in schematic form in more detail. To increase the speed of accessing relevant parameters, there may be numerous such access processes operating in parallel, through multi-tasking or using a multiple processor solution.

The access process can start once the datastream has been given a virtual structure, for example by identifying patterns in the data as will be described below. The access process involves determining a target location for the next data item relating to the parameter of interest. A current location of the access process in the data structure is identified, and using a routing algorithm, the current location is moved to the target location through the data set structure. The routing algorithm may control many such access processes to avoid conflict between processes, and to minimise access delays. When the current location is the target location, the data item corresponding to the target location is accessed. In figure 2 it is accessed from a buffer memory 3, although in principle, the access could involve extracting the data item directly from the datastream before it reaches the buffer memory.

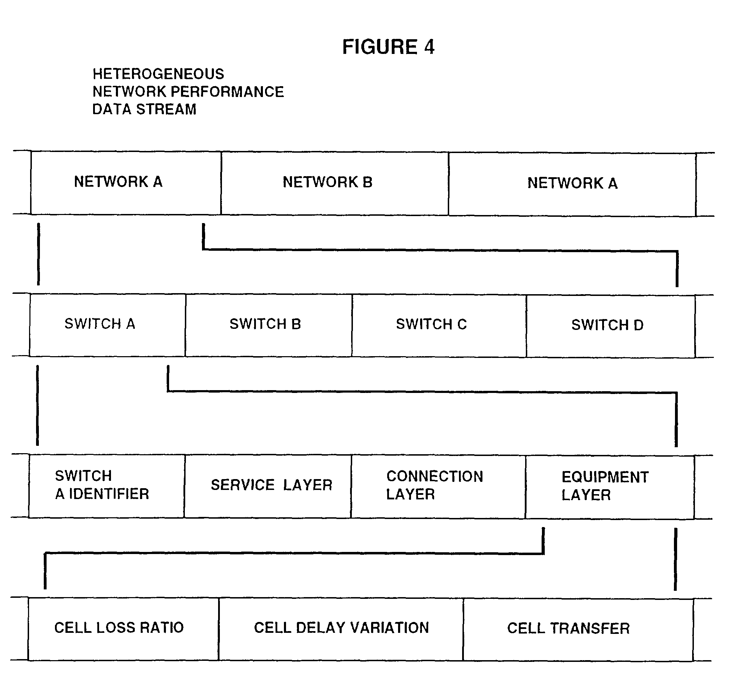

Figure 4 shows a typical datastream from a heterogeneous network, comprising network A and network B. As shown in figure 4, the datastream includes data from each switch in a network. For each switch, the data may be divided into data for each layer, the service layer, connection layer and equipment layer. Within each layer, the data may be divided into particular parameters. Three parameters are shown, cell loss ratio, cell delay variation and cell transfer delay. There may be many others, according to the type of network and the type of switching equipment involved.

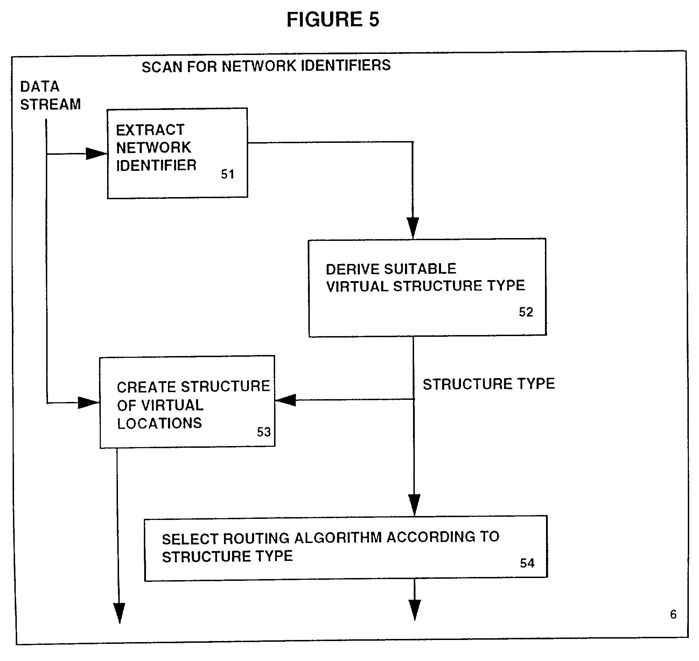

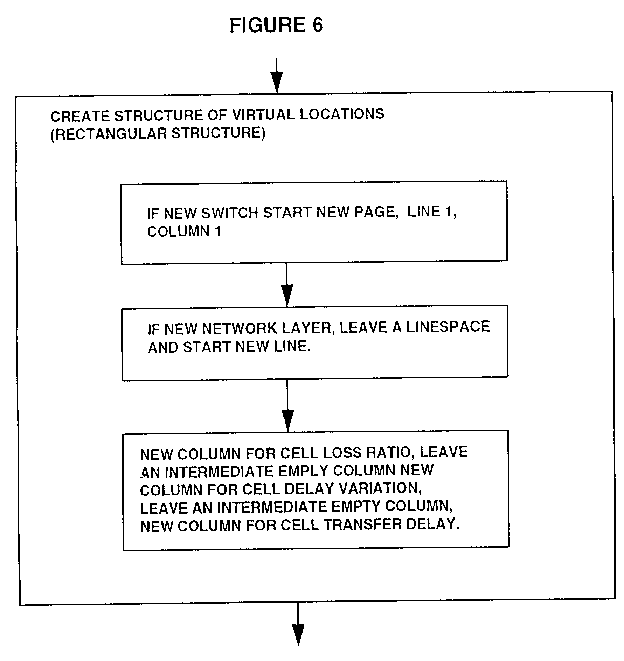

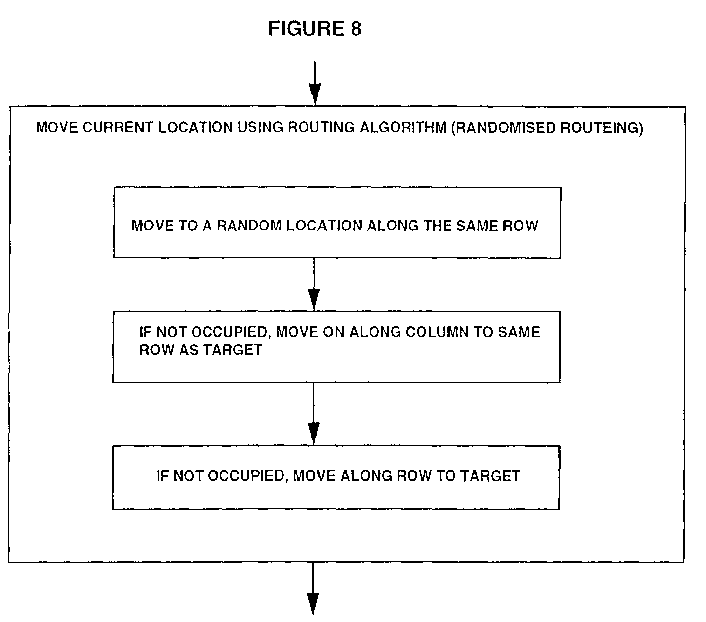

Figure 5 shows in schematic form an example the means 6 for scanning for network identifiers, as shown in figure 2. The datastream is fed to a means for extracting a network identifier. For the datastream shown in figure 4, the network identifier will either be A or B. The identifier is fed to a means 52 for deriving a suitable virtual structure. This may be a table, whose contents will be explained below with reference to figure 8. The type of structure is fed firstly to a means 53 for creating a structure of virtual locations, and secondly to a means 54 for selected a suitable routing algorithm. How the virtual structure of virtual locations of data items in the datastream is constructed will be described below with reference to figure 6. Each of the access processes will need to use the virtual structure of the datastream, and will need to use the output of the means 54 for selecting an appropriate routing algorithm.

All the elements of the means for scanning for network identifiers can be implemented by conventional data processing circuitry such as a microprocessor, or by the same microprocessor or group of parallel processor as may be used to implement the access processes.

Figure 6 shows in schematic form in more detail how a structure of virtual locations may be created. In this example, the datastream is suitable for creating a virtual 3-dimensional rectangular structure. The datastream of figure 4 will be taken as an example. The type of structure will have been determined previously as described above with reference to figure 5. To obtain the dimensions for the structure, the datastream will be analysed by means 53. If a new switch identifier is detected, then a new page of the structure will be started. Blank pages may be left between pages relating to each switch. A new line in the page may be started when a new network layer identifier is detected, e.g. a service layer. Line spaces may be left between the layers. Finally, new columns may be created for each parameter in a given layer. Intermediate empty columns may be left.

In this way a dimensioned structure to suit the datastream can be created. Of course, this may be created as part of a configuration of the network control system shown in figure 2, rather than being created dynamically from the datastream as it comes in from the networks.

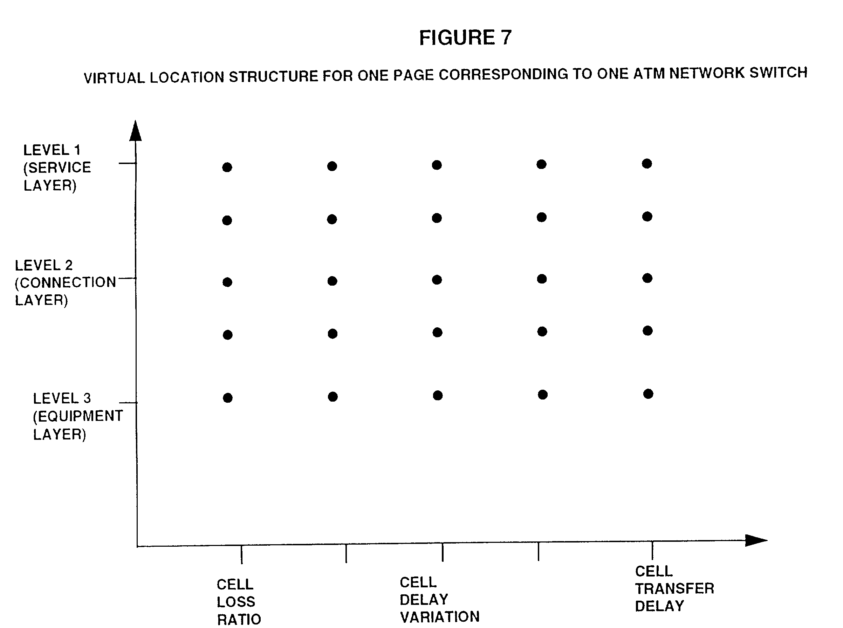

Figure 7 shows a page of the virtual structure, showing each location as a dot. Some of the dots represent data items, for example the bottom row of dots includes locations corresponding to cell loss ratio, cell delay variation and cell transfer delay at the equipment layer of the particular switch for that page of the structure. Intermediate locations are included to enable access processes to occupy locations in between data items.

Figure 8 shows in schematic form how the current location for an access process might be moved through the structure shown in figure 7. The routing algorithm is a randomised routing algorithm which is considered to give good results for routing multiple paths concurrently through a 3-D rectangular network as shown in figure 7.

A first step involves moving to a random location along the same row of locations. If this is not occupied the first move has been successful, and a second move should be along a column to the same row as the target location.

If this location is not occupied by another process, then the third move is to move along the two to the target location. If the target location is not occupied, then this move has been successful and the next step is to access the data item corresponding to the target location.

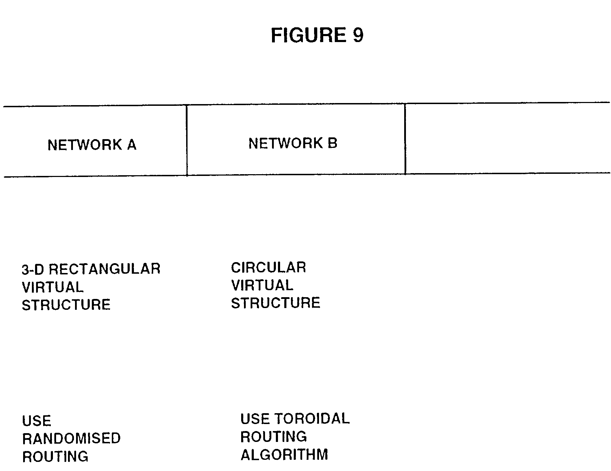

Figure 9 shows how for different networks, the datastream may be provided in a different form, for which a different virtual structure is appropriate. According to the type of virtual structure, different routing algorithms may be appropriate. In the example illustrated in figure 9, network A produces performance data which suits a 3-D rectangular virtual structure. As discussed above, it is appropriate to use randomised routing for such a structure. Network B might produce data which suits a circular virtual structure, in which case toroidal routing may be more appropriate. Many other types of routing are known, and have been investigated extensively in the context of message routing in a network. They will not be described in more detail here.

Of course, the datastream may be different for different switches within a network, and therefore it may be appropriate to change the virtual structure and therefore the selected routing algorithm according to each switch rather than to each network. Furthermore, since more than one routing algorithm may be suitable for a particular type of structure, it may be appropriate to alter the chosen routing algorithm on a dynamic basis according to the quality of the results, perhaps in terms of overall access delays.

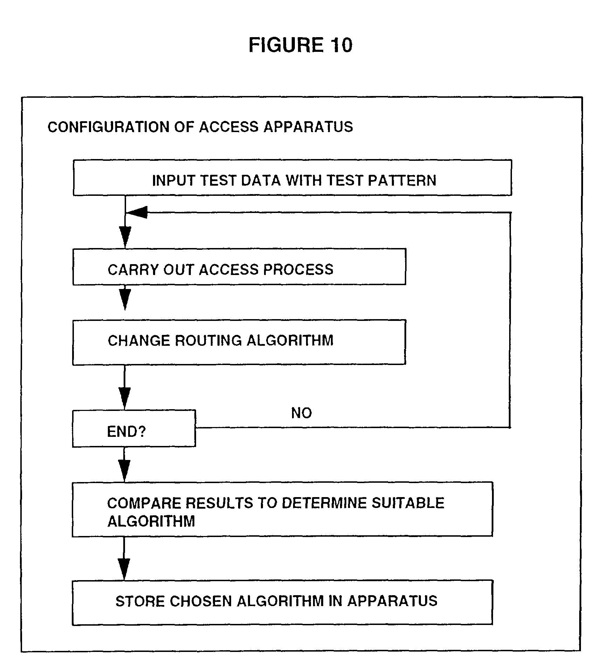

Figure 10 shows how the most appropriate routing algorithm can be chosen for a given data structure. Test data is input containing the particular pattern of data which will be expected from a given switch or a given network. The access process described above with regard to figure 3 is carried out using a first routing algorithm. The results in terms of a given criterion such as overall speed of access for a sample of target data items, and perhaps for multiple access processes simultaneously, are stored. The routing algorithm is then changed, and the test is repeated. The results for a number of routing algorithm can be compared and one or more algorithms selected for use with that particular test pattern. The process can be repeated for other test patterns, until a table is built up of routing algorithms suitable for given test patterns. This table can then be made available for use in stage 54 shown in figure 5.

The buffer memory shown in figure 2 may take the form of a number of page buffers for storing selected portions of the datastream. For example, they may store just data from a small portion of the network, perhaps a number of switches forming a particularly busy route. Alternatively, the buffer can store only data relating to a particular network layer, or to a particular parameter. To enable the access process to address the buffer correctly, there will need to be some correspondence between the virtual structure described above and the actual addresses used to store the data in the buffer.

For maximum speed of access, the buffer could be duplicated so that multiple processors have access to separate copies of the buffer, to reduce delays caused by conflicting accesses.

The buffers may be updated every time the datastream contains data from the same part of the network, e.g. every half a minute for a large network. If updating is carried out more quickly than this, the need for synchronisation will increase. Access processes will need to be confident that the data they are accessing is data which is in the same updating cycle, particularly if the data is then to be used for a correlation process.

Correlation is one type of parameter processing as shown in item 7 of figure 2. Pattern recognition and correlation techniques may be used to detect problem behaviour in the network which would otherwise be difficult to identify.

If the parameters searched do not reveal any unusual behaviour, then the system could be arranged to change automatically to other parameters, to scan in a predetermined manner or in an adaptive manner, for unusual behaviour.

The access processes and the parameter processing could be carried out on the same hardware. For rapid prototyping, small talk might be used, though in practice, to achieve sufficient speed for a large network, it might be more appropriate to use parallel processing hardware, and implement the functions described above, using bulk synchronous parallel (BSP) computers, consisting of processor-memory pairs, and a mechanism for efficient barrier synchronisation of the processors. A BSP computation consists of a sequence of parallel super steps, where each super step consists of a sequence of steps, followed by a barrier synchronisation, at which point all data communications should have been completed. During a super step, each processor can perform computation steps on values held locally, and can handle remote read and write requests. The BSP program may be implemented in a language such as C, though more specific BSP languages have been developed.

In an attached appendix, there is a section of pseudo code, which can be converted into real code, to demonstrate features of the invention. A data space is created with a given number of repetitions of data. The dataspace is created in the form of a cube. A current location in the dataspace is altered by altering the cordinates in the part of the pseudo code following "REM 5 processes". For each of the five processes, a current location is moved to a different first location. Other steps to reach a target and access data are not illustrated.

Although the invention has been described in relation to analysis of network performance data, in principle it can be applied to accessing large amounts of data for other purposes, such as searching, or analysing performance data from other types of systems. Other variations will be apparent to a skilled man within the scope of the claims.

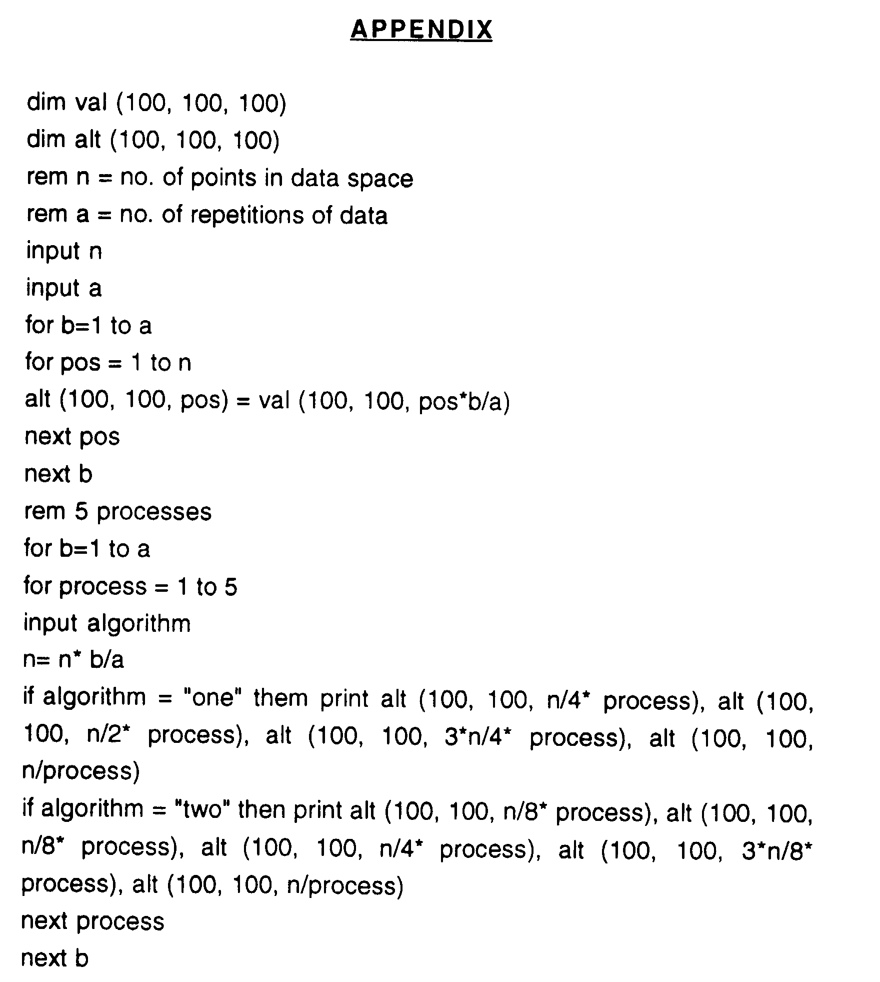

## Claims

1. A method of accessing a data item in a data set, the data set having a virtual structure, and each item having a corresponding virtual location in the structure, the method comprising the steps of:
determining a target location corresponding to the data item to be accessed;
identifying a location as a current location, and selecting a path to move the current location through the data set structure to the target location using a routing algorithm; and
accessing the data item corresponding to the target location, when the current location is the target location.

2. The method of claim 1 further comprising the step of determining occupation status of other locations by other processes wherein the step of moving the current location using a routing algorithm is carried out in response to the occupation status.

3. The method of claim 1 or 2 for searching for data of interest, the method comprising the step of determining whether the target location holds data of interest.

4. A method of accessing data comprising a plurality of access processes carried out concurrently, each comprising the method of any preceding claim, and each using the same routing algorithm.

5. The method of claim 4 wherein the plurality of processes are carried out by multiple processors.

6. The method of claim 4 or 5 further comprising the step of correlating data accessed by one process with data accessed by another process.

7. The method of any preceding claim further comprising the steps of: identifying a pattern in the data set; and
selecting the routing algorithm according to the pattern identified in the data set.

8. A method of accessing a data set comprising a series of subsets having different patterns, the method comprising the steps of:
sequentially executing at least one access process in two or more of the subsets, each process comprising the method of any of claims 1 to 3, wherein the routing algorithm for each process is selected according to the pattern of the subset being accessed.

9. The method of any preceding claim wherein the data set comprises a stream of real time system performance data.

10. The method of any preceding claim wherein the data set contains data relating to a communication network.

11. The method of claim 10 wherein the data set comprises network performance data.

12. A method of retrieving a selected data item from a buffer receiving a stream of real time data, comprising the steps of;
assigning virtual locations to the data;
determining a target location corresponding to the selected item;
allocating a location as a current location;
moving the current location to the target location via other locations according to a routing algorithm;
retrieving the selected data item from the buffer.

13. Apparatus for accessing a data item in a data set, the data set having a virtual structure, and each item having a corresponding virtual location, the apparatus comprising:
means for determining a target location corresponding to the data item to be accessed;
means for identifying a location as a current location;
means for moving the current location to the target location via other locations using a routing algorithm;
accessing the data item when the current location is the target location.

14. A method of configuring apparatus for accessing data using a routing algorithm, selected according to a pattern identified in the data, the method comprising the steps of:
inputting test data comprising a predetermined data pattern;
accessing a data item using the method of any of claims 1 to 11;
repeating the access method using different routing algorithms;
comparing the results to determine a suitable routing algorithm for the given data pattern;
storing the choice of algorithm in the system.
